# EUROPEAN PATENT SPECIFICATION

(11) **EP 2 372 594 B1**
(45) Date of publication and mention of the grant of the patent: **06.05.2015**
(21) Application number: 11001799.3
(22) Date of filing: 03.03.2011
(51) Int. Cl.: G06F 21/55, G06F 21/62, G06Q 10/06

(54) **Security sensitive data flow analysis**
Flussanalyse sicherheitsempfindlicher Daten
Analyse de flux de données sensible à la sécurité

(30) Priority: 19.03.2010 US 727270
(43) Date of publication of application: 05.10.2011
(73) Proprietor: SAP SE, 69190 Walldorf (DE)
(72) Inventor: Arsac, Wihem, 69190 Walldorf (DE)
(74) Representative: Müller-Boré & Partner Patentanwälte PartG mbB

(56) References cited:
- US-A1- 2007 282 841
- VIJAYALAKSHMI ATLURI ET AL: "Supporting conditional delegation in secure workflow management systems", PROCEEDINGS OF THE TENTH ACM SYMPOSIUM ON ACCESS CONTROL MODELS AND TECHNOLOGIES , SACMAT '05, 1 January 2005 (2005-01-01), page 49, XP55001393, New York, New York, USA DOI: 10.1145/1063979.1063990 ISBN: 978-1-59-593045-3
- LONGHUA ZHANG ET AL: "A rule-based framework for role-based delegation and revocation", ACM TRANSACTIONS ON INFORMATION AND SYSTEM SECURITY, vol. 6, no. 3, 1 August 2003 (2003-08-01), pages 404-441, XP55001370, ISSN: 1094-9224, DOI: 10.1145/937527.937530
- KHALED GAALOUL ET AL: "A Secure Task Delegation Model for Workflows", EMERGING SECURITY INFORMATION, SYSTEMS AND TECHNOLOGIES, 2008. SECURWARE '08. SECOND INTERNATIONAL CONFERENCE ON, IEEE, PISCATAWAY, NJ, USA, 25 August 2008 (2008-08-25), pages 10-15, XP031319462, ISBN: 978-0-7695-3329-2
- Hemanth Khambhammettu: "Enforcing Complex Policies in RBAC", , 1 July 2009 (2009-07-01), XP55001429, Retrieved from the Internet: URL:http://www.site.uottawa.ca/~luigi/thes es/khambhammettu.pdf [retrieved on 2011-06-27]

## Description

### TECHNICAL FIELD

The invention relates generally to business process modeling, and more specifically, to security sensitive data flow analysis for business processes.

### BACKGROUND

Organizations conduct business activities in compliance with various accepted standards, functional, and non-functional requirements. Business activities are modeled in business processes. Data related to the execution of business processes may contain sensitive information that may need to be handled carefully. Business processes within organizations may be designed to comply with functional requirements such as legal constraints and security properties to prevent fraudulent activities.

Business processes may be packaged as services in a Service-Oriented Architecture (SOA) implemented on computer systems of various platform types. SOA facilitates the integration and interaction of applications on various platforms via communication protocols using messages. Messages may flow between various systems, thus exposing the communication between applications and the data contained therein to different vulnerabilities and security threats.

Business processes are modeled according to various accepted standards, for example, the Business Process Modeling Notation (BPMN). A BPMN diagram uses four categories of elements to describe a business process. These are flow objects, swim lanes, connecting objects, and artifacts. Flow objects describe the behavior of a business process. Flow objects may be events and activities and may be connected to each other via sequence flows, message flows, and associations. For example, a business process can be described as a sequence of activities followed by users to achieve a business goal. An activity can be decomposed into several sub-processes, which may contribute to achieving the goal of the super-process or to achieving atomic tasks.

In today's connected communication-intensive business activities, there may be a need to ensure that data used in a business process is adequately protected in compliance with security requirements and that users performing activities within a business process may dynamically obtain the necessary security clearance to manipulate data within the business process.

The research paper of Vijayalakshmi Atluri et al. ("Supporting conditional delegation in secure workflow management systems", Proceedings of the tenth ACM symposium on access control models and technologies, SACMAT'05, page 49, New York, USA) discloses that workflows model and control the execution of business processes in an organisation. A workflow typically comprises of a set of co-ordinated activities, known as tasks. Typically, organisations establish a set of security policies, that regulate how the business process and resources should be managed. While a simple policy may specify which user or role can be assigned to execute a task, a complex policy may specify authorisation constraints, such as separation of duties. Users may delegate the tasks assigned to them. Often, such delegations are short lived and come into play when certain conditions are satisfied. For example, a user may want to delegate his task of check approval only when going on vacation, when a check amount is less than a certain amount, or when his workload exceeds a certain limit. In this paper, Vijayalakshmi Atluri et al. extended the notion of delegation to allow for such conditional delegation, where the delegation conditions can be based on time, workload and task attributes. When workflow systems entertain conditional delegation, different types of constraints come into play, which include authorisation constraints, role activation constraints and workflow dependency requirements. Vijayalakshmi Atluri et al. address the problem of assigning users to tasks in a consistent manner such that none of the constraints are violated.

The paper of Loghua Zhang et al. ("A rule-based framework for role-based delegation and revocation", ACM transactions on information and system security, vol. 6, no. 3, pages 404-441) discloses that delegation is the process whereby an active entity in a distributed environment authorises another entity to access resources. In today's distributed systems,. a user often needs to act another user's behalf with some subset of his/her rights. Most systems have attempted to resolve such delegation requirements with ad-hoc mechanisms by compromising existing disorganised policies or simply attaching additional components to their applications. Still, there is a strong need in the large., distribute systems for mechanism that provides effective privilege delegation and revocation management. This paper describes a rule-based framework for role-based delegation and revocation. The basic idea behind a role based delegation is that users themselves may delegate role authorities to others to carry out some functions authorised to the former. Loghua Zhang et al. present a role based delegation model called RDM 2000 supporting hierarchical roles and multi-step delegation. Different approaches for delegation and revocation are explored, and a rule-based language for specifying and enforcing policies on RDM 2000 is proposed.

Khaled Gaaloul et al. ("A secure task delegation model for workflows", Emerging security information, Systems and Technologies, 2008. Secureware '08. Second international conference on, IEEE, Piscataway, NJ, USA, pages 10-15) disclose workflow management systems which provide some of the required technical means to preserve integrity, confidentiality, and availability at the control-, data-, and task assignment layers of a workflow. Khaled Gaaloul et al. observe a move away from predefined strict workflow enforcement approaches towards supporting exceptions which are difficult to foresee when modelling a workflow. One specific approach for exception handling is that of task delegation. The delegation from a task from one principal to another, however, has to be managed and executed in a secure way, in this context implying the presence of a fixed set of delegation events. In this paper, Khaled Gaaloul et al. propose a secure task delegation model within a workflow. The novel part of this model is separating the various aspects of delegation with regards to users, tasks, events and data, portraying them in terms of a multi-layered state machine. Further, Khaled Gaaloul et al. define delegation scenarios and analyse additional requirements to support secure task delegation over these layers. Furthermore, Khaled Gaaloul et al. detail a delegation protocol with a specific focus on the initial negotiation steps between the involved principals.

US 2007/282841 A1 discloses a system and method for program access control which includes, for a typestate, providing typestate properties and assigning a role to the typestate in a program in accordance with the typestate properties. Access to operations is limited for the type state in the program based on the role assigned to the typestate and an access permission level.

The thesis of Hemanth Khambhammettu ("Enforcing complex policies in RBAC") discloses that access control requirements have become increasingly complex in recent years, making access control mechanisms based on traditional access control models either inefficient or inappropriate. Further, role-based access control provides the basis for an efficient access control mechanism that simplifies security administration and offers support for more complex requirements such as separation of duty. In this thesis, Hemanth Khambhammettu developed a new framework for enforcing constrained role-based access control policies that would reduce the running times of algorithms that evaluate access requests in the presence of authorisation constraints. In addition, Hemanth Khambhammettu developed a set of user delegation policies for role-based access control models that includes both grant and transfer delegations, and an enforcement model for such delegation policies. In particular, Hemanth Khambhammettu developed appropriate authorisation mechanisms which ensure that permitting a delegation request does not prevent the completion of workflow instances.

### SUMMARY

These and other benefits and features of embodiments of the invention will be apparent upon consideration of the following detailed description of preferred embodiments thereof, presented in connection with the following drawings.

In various embodiments, a system is presented. In various embodiments, the system may be implemented to analyze organizational polices and grant access to data to users within a business process based on organizational policies.

In various embodiments, a system of the embodiments may create authorization matrixes specifying permissions and associations between resources, tasks, roles, data objects, and data fields.

In various embodiments, a method is presented. The method may analyze authorization information to grant permission to users to perform tasks and access data or data fields.

In various embodiments, another method is presented. The method may analyze authorization information to create an authorization matrix for data objects (and data fields thereof) according to functional requirements imposed on users, roles, tasks, and data.

The invention is defined by independent claims 1, 3 and 6.

### BRIEF DESCRIPTION OF THE DRAWINGS

The claims set forth the embodiments of the invention with particularity. The invention is illustrated by way of example and not by way of limitation in the figures of the accompanying drawings in which like references indicate similar elements. The embodiments of the invention, together with its advantages, may be best understood from the following detailed description taken in conjunction with the accompanying drawings.
Figure 1 is a block diagram of a system according to an embodiment.
Figure 2 is a flow diagram of a process according to various embodiments.
Figure 3 is a block diagram of exemplary stakeholders in a business process and relationships between the stakeholders according to various embodiments.
Figure 4 is a flow diagram of an embodiment for creating an authorization matrix for data objects based on dynamic delegation of permissions.
Figure 5 is a block diagram of an exemplary loan origination business process according to various embodiments.
Figure 6 is a block diagram of a system according to another embodiment.

### DETAILED DESCRIPTION

Embodiments of techniques for security sensitive data flow analysis are described herein. In the following description, numerous specific details are set forth to provide a thorough understanding of embodiments of the invention. One skilled in the relevant art will recognize, however, that the invention can be practiced without one or more of the specific details, or with other methods, components, materials, etc. For example, reference to vertical or horizontal direction herein can be seen as a convention and changed when practicing the invention. In other instances, well-known structures, materials, or operations are not shown or described in detail to avoid obscuring aspects of the invention.

Reference throughout this specification to "one embodiment", "this embodiment" and similar phrases, means that a particular feature, structure, or characteristic described in connection with the embodiment is included in at least one embodiment of the present invention. Thus, the appearances of these phrases in various places throughout this specification are not necessarily all referring to the same embodiment. Furthermore, the particular features, structures, or characteristics may be combined in any suitable manner in one or more embodiments.

In various embodiments, a business process may describe an execution of a business goal as receiving a set of inputs, manipulating the received inputs, and producing a set of outputs. Business processes may form complex interaction patterns with other processes. A business process represents a set of activities describing a fulfillment of a business task or a collection of business tasks in a specific order. The set of activities in the specific order are also referred to as business process steps. The business process steps describe the flow of data within the business process. According to various embodiments, the order, in which the business process steps are executed in, may also be referred to as "control flow" or "business process control flow". According to various embodiments, the manner, in which data may be manipulated in a business process, may also be referred to as "data flow" or "business process data flow".

According to various embodiments, the business process may include, but is not limited to, activity elements, event elements, sub-process elements, tasks, data objects, and other elements.

Event elements describe "something that happens." A "start event" acts as a trigger for a business process. An "end event" represents the result of a business process. An "intermediate event" represents something that happens between the start and end events. An intermediate event may synchronize the business process with external stimuli.

An activity describes the kind of work which is to be performed, and, generally, an atomic unit of work.

A task represents a single unit of work. Tasks may also represent human interactions (e.g., as opposed to other activities which may represent automated interactions with other business systems or business processes).

In various embodiments, performing a task within a business process may require accessing data involved in the business process. Users may be members of roles and permissions to perform tasks may be associated with such roles.

A role may be a function assigned to a user or a group of users. Within an organizational structure, users may be assigned roles according to their job function. For example, within an Information Technology (IT) landscape, a role may define security permissions applicable to a user or a group of users.

A role may be created for each function within a business entity. A role can require resources with a specific set of attributes, qualifications or skills to complete the function the role is created for. In various embodiments, resources are human or software agents that perform work within the business process. The assignment of a role to a resource provides the resource with the authorization needed to accomplish tasks and to access data. Performing a task is related to accessing data. Business objects are data objects involved in the business process. According to various embodiments, data objects provide data to execute activities within a business process. Data objects may also hold data which is a result of a completed activity. Data objects have data fields representing information that is stored and used within the business entity.

In various embodiments, functional and non-functional requirements may be imposed on a business process. Non-functional requirements can be viewed as quality attributes. They can be seen as global qualities of a software system, such as flexibility, maintainability, usability, etc.

Functional requirements are derived from statutory regulations or organizational policies that impose a certain care in handling sensitive data. For instance, there may be functional requirements specifying desired compliance of financial data and financial tools in a system with the requirements set forth in the Sarbanes-Oxley Act of 2002 (Pub.L. 107-204, 116 Stat. 745, enacted July 30, 2002).

In another example of functional requirements, the Directive 95/46/EC of the Official Journal of the European Communities of 23 November 1995 (L.281) is related to the protection of individuals with regard to the processing of personal data and the free movement of such data. Such regulations may specify how sensitive data should be handled.

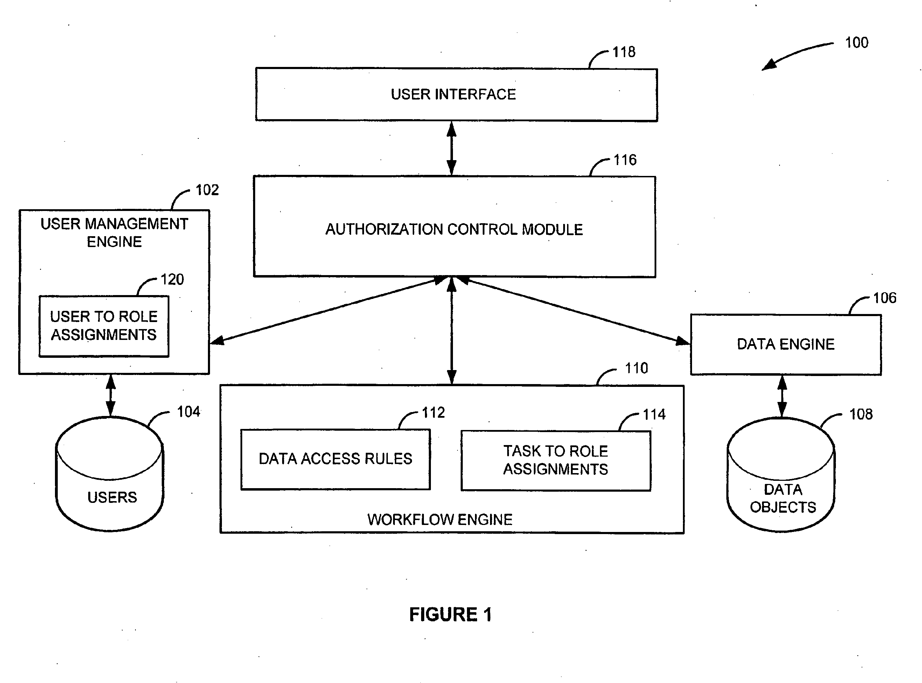

Figure 1 is a block diagram of a system according to an embodiment. Referring to Figure 1, the system 100 includes a user management engine 102 manages users 104 performing activities and tasks in a business process and maintains user to role assignments 120. A data engine 106 manages data objects 108 used in the business process. A workflow engine 110 maintains various policies relevant for the execution of the business process, for example, data access rules 112 and task to role assignments 114. The authorization control module 116 communicates with the user management engine 102, the data engine 106, and the workflow engine 110 to determine authorizations (e.g., security permissions) for users 104 on data objects 108 reflecting organizational policies maintained in the workflow engine 110. The user interface 118 displays business process models and business process execution details. In various embodiments, users 104 and data objects 108 may be maintained in one or more databases stored on one or more memory devices.

The authorization control module 116 ensures that organizational policies are complied with and are applied correctly. In various embodiments, the authorizations created by the authorization control module 116 may be applied to the business process and execution of the business process may be simulated on a validation platform. Thus, the business process may be validated for compliance to functional and non-functional requirements of the organization at design time.

In various embodiments, a variety of policies on data may need to be followed in an organization. For example, data confidentiality may be applied differently for different data fields of data objects. Some data fields may require extra security permissions, for example, data fields with sensitive personal data, such as gender, ethnic group, religious beliefs, political affiliation, and others. For example, in a banking business process, clerks in the bank are the users of the business process. Clerks may be granted access to certain data fields as necessary to perform activities within the business process but sensitive personal data may be kept restricted to ensure data confidentiality and austerity and prevent favoritism and discrimination. Following the banking example, a bank clerk assigned to a role "loan approval" may need to review data related to credit ratings and loan history to perform the activity "approve loan." However, statutory and organizational requirements may be implemented in organizational policies to prevent the clerk to obtain further personal sensitive information, such as gender, race, and others. Following this approach, activities within a business process can be compliant with functional requirements of the organization.

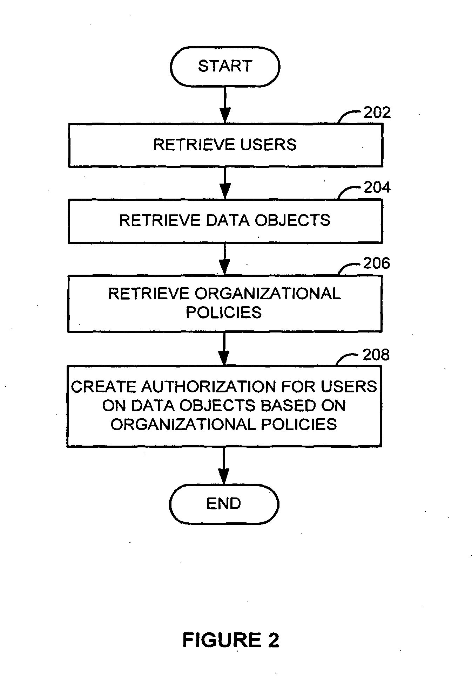

Figure 2 is a flow diagram of a process according to various embodiments. Referring to Figure 2, at process block 202, users in a business process are retrieved. In various embodiments, users may be stored in one or more databases on one or more memory devices. At process block 204, data objects are retrieved. Data objects represent data required for activities and tasks in the business process, or data produced as a result of activities and tasks in the business process. At process block 206, organizational policies are retrieved. The organizational policies may be relevant for one or more functional requirements, such as security requirements for data confidentiality and data austerity based on legislation or service level agreements between business partners (SLAs). At process block 208, authorization is created for users on data objects based on the retrieved organizational policies.

In various embodiments, the process as described in Figure 2 may be performed by components as described in Figure 1.

In various embodiments, security permissions may need to be granted to users on demand dynamically. In such cases, fine-grained data access policies may be implemented reflecting complicated relationships between users, roles, tasks, permissions, and data fields of data objects. For example, a user may need to perform a task on demand. In such cases, the user may need to have permission to perform the task delegated to them, and permission to access data relevant for the task delegated to them. Such permissions can be delegated if delegating the permissions does not violate organizational policies. Such fine-grained authorization information may be created to form access control lists (ACLs) for data objects or data fields, and several ACLs may be combined to form an authorization matrix. An authorization matrix may reflect the relationships and authorizations between all stakeholders, such as resources (e.g., users), tasks, roles, data objects, and data fields. Thus, a model of the dependencies between the stakeholders is implemented according to various embodiments.

In various embodiments, a set of permissions P defines the right to execute an operation on an object O. A permission p is a pair (f; o) where f is a function and o an object such that p ⊆ f × o.

In various embodiments, a pair (U, R) is a set of users, U and a set of roles R, with the following relation assignments: a user role assignment (URA), such that URA ⊆ U × R (mapping users to roles they are members of); and a permission role association (PRA), such that PRA ⊆ P × R (defining the set of permissions associated with a role).

Further, a task role assignment (TRA) may be defined where TRA ⊆ T × R (mapping roles to tasks they are assigned to accomplish). A permission task association (PTA), where PTA ⊆ P × T defines the set of permissions required to execute a task.

When users are assigned to roles (URA, PRA) authorizations needed to fulfill specific tasks are provided via the PTA.

If a task T should be delegated, a first user (U_{dr}) can delegate the permission to execute a task to a second user (U_{de}) in a role R. The delegation of permission means that the second user (U_{de}) has the permission to fulfill the task.

Further, a task delegation association (TDA) may be defined as a tuple where TDA = (T; R; U_{dr}; U_{de}; DC). In the TDA tuple, T is the delegated Task, R the delegated role, U_{dr} the first user, U_{de} the second user and DC the delegation conditions (e.g., according to organizational policies).

To provide security permissions to users of tasks for specific data fields of data objects, each data object has a list of its fields and their related access rights. The tuple (U, R, T, D) maintains access rights where U is a set of users, U, R is a set of roles, T is a set of tasks, and D is a set of data objects.

A data role assignment (DRA) maps roles to data they request access to such as DRA ⊆ D × R. A data permission association (DPA) defines the permission required to access a field of a data object, such that DPA ⊆ D × P. Access may be, for example, read-only, full-control, no-access, and others.

Thus, a model of a permission association may be created for data and role with the tuple (PDR),also specifying the DRA, DPA and PRA relationships. Following the definitions above, it can be determined that access to a data object D may be granted to a role if the following condition is met: (d; r) ∈ DRA ⇒ {p ∈ P|(d, p) ∈ DPA)} ⊂ {p| (p, r) ∈ PRA)}.

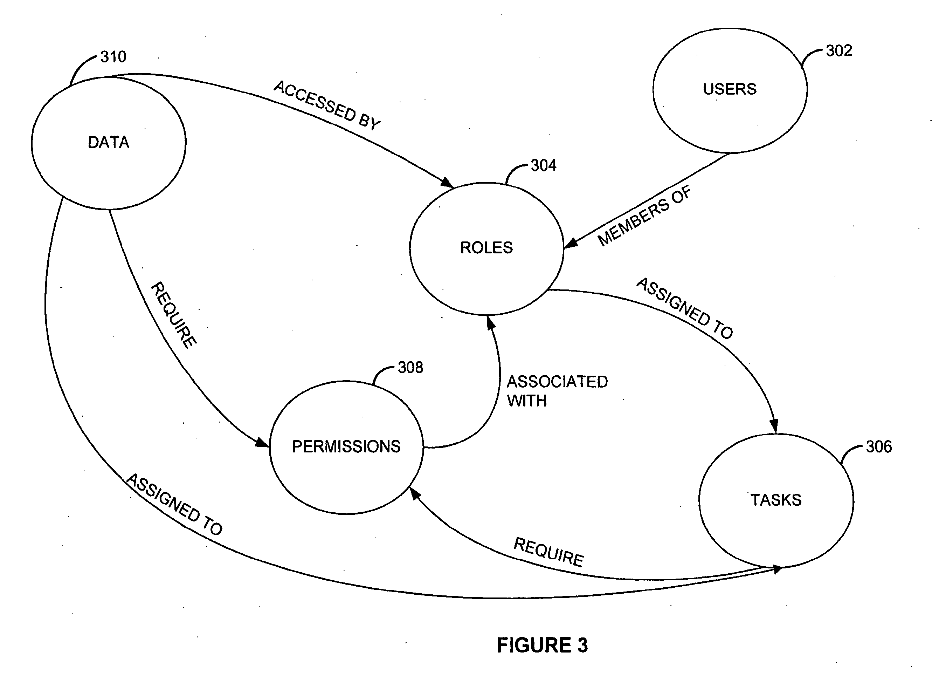

For example, referring to Figure 3, users 302 are members of roles 304. The roles 304 are assigned to tasks 306 to accomplish them. Tasks 306 require permissions 308 to be accomplished. Further, data 310 require permissions 308 and accessed by roles 304. Permissions 308 are further associated with roles 304. Data 310 is also assigned to tasks 306 because tasks 306 may require data to be accomplished. Following the arrow from users 302 to roles 304, a set including users mapped to roles is retrieved (e.g., URA). Similarly, following the arrow from roles 304 to tasks 306, a set of roles mapped to tasks is retrieved (e.g., TRA). Following the manner above, TPA is derived following the arrow from tasks 306 to permissions 308; PRA is derived following the arrow from permissions 308 to roles 304; DRA is derived following the arrow from data 310 to roles 304; and DPA is derived following the arrow from data 310 to permissions 308.

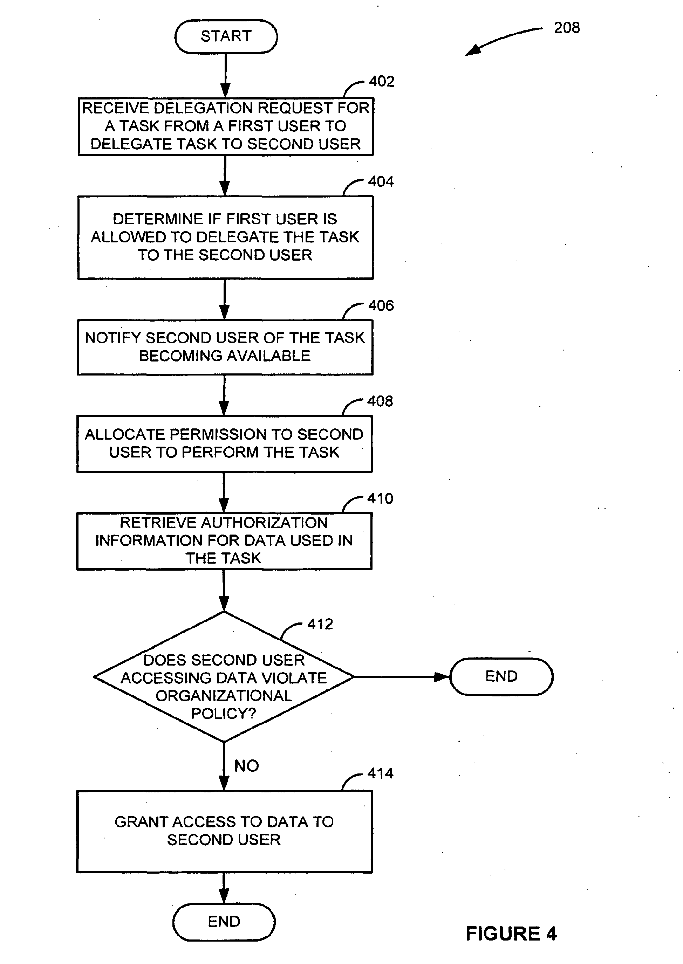

Figure 4 is a flow diagram of an embodiment for creating an authorization matrix for data objects based on delegation of permissions as outlined in the model above. Referring to Figure 4, at process block 402, a delegation request is received. The delegation request is from a first user wishing to delegate permission to perform a task to a second user. At process block 404, it is determined if the first user may delegate the task to the second user. This determination is performed by analyzing URA and TRA assignments under PRA and PTA permissions (e.g., may be performed by an authorization control module such as 116 in Figure 1). If the first user has sufficient permissions under PRA and PTA, the first user can delegate the task to the second user, at process block 406, the second user is notified that the task is available. At process block 408, permission to execute the task is allocated to the second user. At this stage, the second user has permission to perform the task but may not have access to the data needed for the task. At process block 410, authorization information for the data used in the task is retrieved. To determine if the second user has permission to obtain the data, the DRA under DPA is analyzed to determine if granting access to the second user to the data (and data fields thereof depending on the task) will violate any organizational policies, at process block 412. If no organizational policies are violated, at process block 414 access to data fields of data needed for the task is granted to the second user. Consequently, an authorization matrix is created reflecting specific permissions on each data field granted to the second user under the role required to perform the delegated task. Each data field may be allocated specific permissions such as read-only, read-write, full-access, no-access and others. Thus, the second user will have permission to perform the task as delegated to them by the first user, but will only have access to data fields as permitted in organizational policies specified in DRA under DPA to ensure data is distributed on a need-to-know basis and data confidentiality and data austerity is preserved.

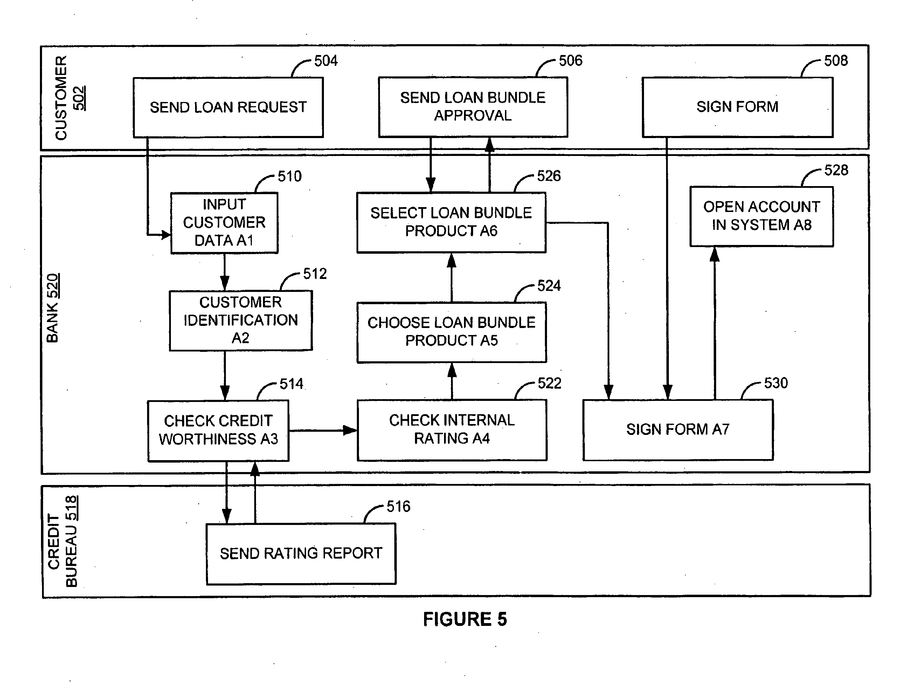

In various embodiments, a Loan Origination Business Process (LOBP) scenario may be implemented as described in Figure 5. The LOBP is a business process that evaluates and possibly accepts a Customer (C) 502 request for a Loan Amount (LA). Referring Figure 5, A Bank 520 (B) carries out an evaluation of the customer's credit worthiness internally and receives credit worthiness reports from Credit Bureaus (CB) 518 (e.g, as part of a send rating report 516 task).
The business entities involved in the business process are a customer C 502 requesting a loan, a bank B 520 carrying out an evaluation of the customer's credit worthiness, and a credit bureau CB 518 requested as a third-party business partner to check the credit worthiness of a customer.
The LOBP may also include the following users:
- A bank customer 502 to acquire a loan (e.g., by sending a loan request 504, sending loan bundle approval 506, and signing form for loan 508).
- A first clerk performing pre-processing (hereinafter B.PRC) in the bank, receiving data about customer C 502 and identifying customer C 502. Receiving data about customer C is hereinafter referred to as A1 (e.g., activity 1 at block 510) and identifying customer C is hereinafter referred to as A2 (e.g., activity A2 at block 512).
- A second clerk performing post-processing (hereinafter B.POC) in the bank, responsible for checking credit worthiness (hereinafter Activity A3 and A4 at blocks 514 and 522) and selecting the most appropriate loan bundle product (hereinafter Activity A5 and A6 at blocks 524 and 526).
- A manager of the bank B (hereinafter B.M), performing loan approval (e.g., as part of activity A7 at block 530).
- A credit bureau supervisor (hereinafter CB.S) performing checks on credit worthiness of a customer and sending a rating report to B.POC (e.g, as part of activity A3 at block 514).

Within the LOBP scenario, Customer Data (CD) profiles may be created and stored in the bank information system (e.g., as part of Activity 8 at block 528). The fields of CD and access permissions on roles are listed in Table 1 below.

**Table 1**

| Data field | Permission | Forbidden Roles |
|---|---|---|
| ID | Full | |
| name | Read | B.POC |
| address | Read | B.POC, CB.S |
| birthDate | Read | B.POC, B.M, CB.S |
| salary | Read | B.POC, CB.S |
| gender | Read | B.POC, B.M, CB.S |
| ethnic group | No | B.PRC, B.POC, B.M, CB.S |
| job | Read | CB.S, B.POC, B.M |
| bank account history | Full | B.POC, CB.S |
| payment behavior | Full | CB.S |
| credential feedback | Full | CB.S |

Within B 520, several roles, all with different levels of responsibility, are defined. For instance, a B.PRC (e.g., pre-processing clerk in bank) role is responsible for receiving and identifying C's request. The B.PRC role may launch and update CD. The B.POC (e.g., post-processing clerk in bank) is responsible for analyzing internal and external rating to check C's credit worthiness. The B.POC identifies the most appropriate bundle product (for example, in choose loan bundle product 524). B.POC calculates the price of the loan and submits a loan proposal and loan conditions to C (e.g., as part of A6, select loan bundle product 526). The manager (B.M, e.g. manager of the bank) is responsible for approval of the loan. As manager, the role B.M may have permission to perform all activities within the bank 520, while the role B.PRC may only have permission to perform activities 1, 2, 5, 6, and 8 at blocks 510, 512, 524, 526, and 528, respectively; and the role B.POC may have permission to perform activities 3 and 4 at blocks 514 and 522, respectively.

As seen in Table 1, each field in CD is assigned a type of permission and roles. To ensure data austerity, some roles may be prevented from accessing certain fields, for example, B.POC role is forbidden access to data fields such as name, gender, and ethnic group of CD. To enable specific access rights on specific CD fields, TRA and URA and the associated permissions PTA, PRA are combined with the DRA and the associated permission DPA, to create an authorization matrix taking into account permissions set on roles, tasks, and data (e.g., following the model described in Figure 3). The bank system provides a list of users, roles and tasks entitled to accomplish the LOBP. During the instantiation phase of the business process workflow, the URA, TRA assignments are instantiated according to their respective permission associations.

In various embodiments, there may be a need to delegate roles from one employee (e.g., user) to another employee (e.g., user). For instance, a bank employee, acting as a PRC role, is entitled to execute the A1 activity at block 510 of the LOBP. If no other B.PRC role member is available, the employee has to delegate his current task to another bank employee, acting as a B.POC role, who is usually entitled to execute the A5 activity. The delegation may be allowed.

However, in everyday activities, the employee with the B.POC role may encounter the customer ID again and remember personal data that they acquired while executing a delegated task. Thus, principles of data austerity might be violated. Evidently, there is a need to be able to determine the possible outcomes of the business process at design time to enable business process designers to design business processes compliant with data confidentiality and data austerity principles. Using the authorization matrix based on all of URA, TRA, DRA, and their respective permission associations (e.g., PRA, PTA, and DPA), a validation tool can simulate the execution of the business process and possible pitfalls in the security properties assigned to data objects and fields thereof. Thus, compliance to security standards may be ensured at design time.

Some embodiments of the invention may include the above-described methods being written as one or more software components. These components, and the functionality associated with each, may be used by client, server, distributed, or peer computer systems. These components may be written in a computer language corresponding to one or more programming languages such as, functional, declarative, procedural, object-oriented, lower level languages and the like. They may be linked to other components via various application programming interfaces and then compiled into one complete application for a server or a client. Alternatively, the components may be implemented in server and client applications. Further, these components may be linked together via various distributed programming protocols. Some example embodiments of the invention may include remote procedure calls being used to implement one or more of these components across a distributed programming environment. For example, a logic level may reside on a first computer system that is remotely located from a second computer system containing an interface level (e.g., a graphical user interface). These first and second computer systems can be configured in a server-client, peer-to-peer, or some other configuration. The clients can vary in complexity from mobile and handheld devices, to thin clients and on to thick clients or even other servers.

The above-illustrated software components are tangibly stored on a computer readable storage medium as instructions. The term "computer readable storage medium" should be taken to include a single medium or multiple media that stores one or more sets of instructions. The term "computer readable storage medium" should be taken to include any physical article that is capable of undergoing a set of physical changes to physically store, encode, or otherwise carry a set of instructions for execution by a computer system which causes the computer system to perform any of the methods or process steps described, represented, or illustrated herein. Examples of computer-readable media include, but are not limited to: magnetic media, such as hard disks, floppy disks, and magnetic tape; optical media such as CD-ROMs, DVDs and holographic devices; magneto-optical media; and hardware devices that are specially configured to store and execute, such as application-specific integrated circuits ("ASICs"), programmable logic devices ("PLDs") and ROM and RAM devices. Examples of computer readable instructions include machine code, such as produced by a compiler, and files containing higher-level code that are executed by a computer using an interpreter. For example, an embodiment of the invention may be implemented using Java, C++, or other object-oriented programming language and development tools. Another embodiment of the invention may be implemented in hard-wired circuitry in place of, or in combination with machine readable software instructions.

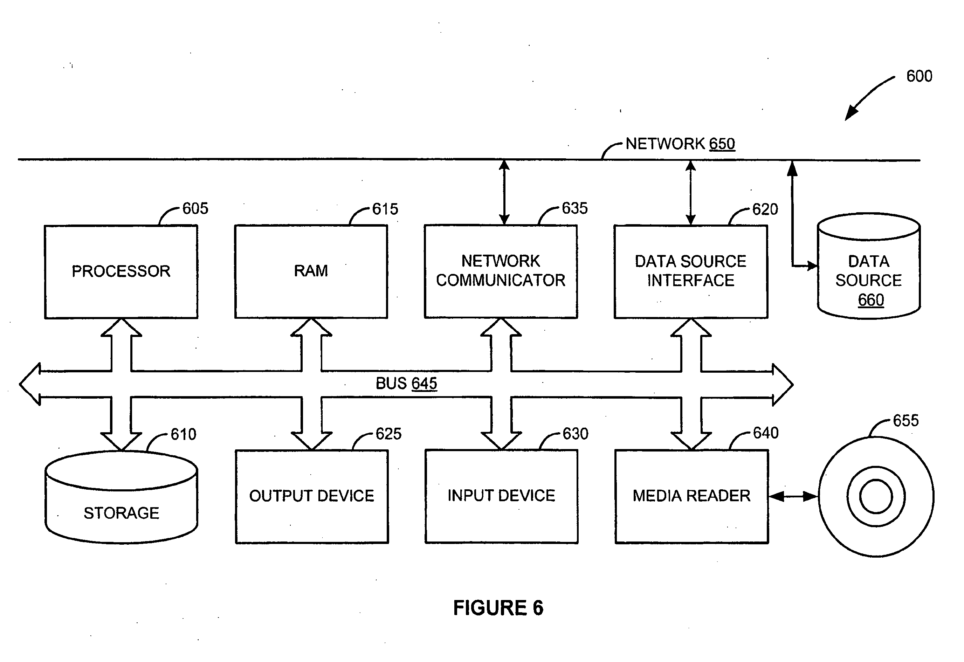

Figure 6 is a block diagram of an exemplary computer system 600. The computer system 600 includes a processor 605 that executes software instructions or code stored on a computer readable storage medium 655 to perform the above-illustrated methods of the invention. The computer system 600 includes a media reader 640 to read the instructions from the computer readable storage medium 655 and store the instructions in storage 610 or in random access memory (RAM) 615. The storage 610 provides a large space for keeping static data where at least some instructions could be stored for later execution. The stored instructions may be further compiled to generate other representations of the instructions and dynamically stored in the RAM 615. The processor 605 reads instructions from the RAM 615 and performs actions as instructed. According to one embodiment of the invention, the computer system 600 further includes an output device 625 (e.g., a display) to provide at least some of the results of the execution as output including, but not limited to, visual information to users and an input device 630 to provide a user or another device with means for entering data and/or otherwise interact with the computer system 600. Each of these output 625 and input devices 630 could be joined by one or more additional peripherals to further expand the capabilities of the computer system 600. A network communicator 635 may be provided to connect the computer system 600 to a network 650 and in turn to other devices connected to the network 650 including other clients, servers, data stores, and interfaces, for instance. The modules of the computer system 600 are interconnected via a bus 645. Computer system 600 includes a data source interface 620 to access data source 660. The data source 660 can be accessed via one or more abstraction layers implemented in hardware or software. For example, the data source 660 may be accessed by network 650. In some embodiments the data source 660 may be accessed via an abstraction layer, such as, a semantic layer.

A data source is an information resource. Data sources include sources of data that enable data storage and retrieval. Data sources may include databases, such as, relational, transactional, hierarchical, multi-dimensional (e.g., OLAP), object oriented databases, and the like. Further data sources include tabular data (e.g., spreadsheets, delimited text files), data tagged with a markup language (e.g., XML data), transactional data, unstructured data (e.g., text files, screen scrapings), hierarchical data (e.g., data in a file system, XML data), files, a plurality of reports, and any other data source accessible through an established protocol, such as, Open DataBase Connectivity (ODBC), produced by an underlying software system (e.g., ERP system), and the like. Data sources may also include a data source where the data is not tangibly stored or otherwise ephemeral such as data streams, broadcast data, and the like. These data sources can include associated data foundations, semantic layers, management systems, security systems and so on.

In the above description, numerous specific details are set forth to provide a thorough understanding of embodiments of the invention. One skilled in the relevant art will recognize, however that the invention can be practiced without one or more of the specific details or with other methods, components, techniques, etc. In other instances, well-known operations or structures are not shown or described in details to avoid obscuring aspects of the invention.

Although the processes illustrated and described herein include series of steps, it will be appreciated that the different embodiments of the present invention are not limited by the illustrated ordering of steps, as some steps may occur in different orders, some concurrently with other steps apart from that shown and described herein. In addition, not all illustrated steps may be required to implement a methodology in accordance with the present invention. Moreover, it will be appreciated that the processes may be implemented in association with the apparatus and systems illustrated and described herein as well as in association with other systems not illustrated.

The above descriptions and illustrations of embodiments of the invention, including what is described in the Abstract, is not intended to be exhaustive or to limit the invention to the precise forms disclosed. While specific embodiments of, and examples for, the invention are described herein for illustrative purposes, various equivalent modifications are possible within the scope of the invention, as those skilled in the relevant art will recognize. These modifications can be made to the invention in light of the above detailed description.

## Claims

1. A computer readable storage medium having computer readable instructions tangibly stored thereon which when executed by the computer, cause the computer to perform a method for security-aware data flow analysis, the method comprising:
receiving (402) a delegation request from a first user to delegate a task (306) to a second user;
allocating (408) permission (308) to the second user to perform the task (306) if no organizational policies are violated,
wherein allocating (408) permission to the second user to perform the task comprises:
retrieving one or more user to role mappings (120) from a user management engine (120) and one or more task to role assignments (114) for the task from a workflow engine (110);
determining (404) if the first user has permission to delegate the task to the second user; and
determining if the delegation request can be granted based on permissions associated with the one or more user to role mappings (120) and the task to role assignments;
retrieving data (310) used in the task (306) via a data to task association from a data engine (106);
retrieving one or more data to role mappings of the data (310) used in the task (306) and one or more permissions (308) associated with the one or more data to role mappings of the data (310) used in the task (306); and
determining if access to the data (310) used in the task (306) can be granted to the second user based on the one or more data to role mappings of the data (310) used in the task (306) and the one or more permissions (308) associated with the one or more data to role mappings of the data (310) used in the task (306),
wherein determining if access to the data (310) used in the task (306) can be granted to the second user comprises:
determining a role (304) the second user is a member of via one or more user to role mappings (120); and
determining if the role (304) the second user is a member of is in the one or more data to role mappings of the data (310) used in the task (306); and
granting (414) access to the data (310) used in the task (306) to the second user,
wherein granting access to the data (310) used in the task (306) to the second user comprises determining access rights for the second user for one or more data fields of the data (310) used in the task (306),
wherein an authorisation matrix is created reflecting permissions on each data field granted to the second user under the role required to perform the task,
wherein access control lists for the data fields are combined to form the authorisation matrix,
wherein determining the access rights for the second user for the one or more data fields of the data (310) used in the task (306) comprises:
determining one or more permissions (308) associated with the one or more data fields of the data (310) used in the task (306);
determining one or more roles (304) associated with the one or more permissions (308) associated with the one or more data fields of the data (310) used in the task (306); and
granting access to the one or more data fields of the data (310) used in the task (306) to the second user if a role (304) the second user is a member of is in the one or more roles (304) associated with the one or more permissions (308) associated with the one or more data fields.

2. The computer readable storage medium of claim 1, wherein the method further comprises notifying the second user that the task is available.

3. A computerized system (100) including a processor, the processor communicating with one or more memory devices storing instructions, the instructions comprising:
an authorization control module (116) operable to create an authorization matrix for one or more data fields of one or more data objects,
wherein the authorization control module (116) is further operable to grant access to the one or more data objects to one or more users based on one or more organizational policies received from the workflow engine (110), the method comprising:
receiving (402) a delegation request from a first user to delegate a task (306) to a second user;
allocating (408) permission (308) to the second user to perform the task (306) if no organizational policies are violated,
wherein allocating (408) permission to the second user to perform the task comprises:
retrieving one or more user to role mappings (120) from a user management engine (120) and one or more task to role assignments (114) for the task from a workflow engine (110);
determining (404) if the first user has permission to delegate the task to the second user; and
determining if the delegation request can be granted based on permissions associated with the one or more user to role mappings (120) and the task to role assignments;
retrieving data (310) used in the task (306) via a data to task association from a data engine (106);
retrieving one or more data to role mappings of the data (310) used in the task (306) and one or more permissions (308) associated with the one or more data to role mappings of the data (310) used in the task (306); and
determining if access to the data (310) used in the task (306) can be granted to the second user based on the one or more data to role mappings of the data (310) used in the task (306) and the one or more permissions (308) associated with the one or more data to role mappings of the data (310) used in the task (306),
wherein determining if access to the data (310) used in the task (306) can be granted to the second user comprises:
determining a role (304) the second user is a member of via one or more user to role mappings (120); and
determining if the role (304) the second user is a member of is in the one or more data to role mappings of the data (310) used in the task (306);
and
granting (414) access to the data (310) used in the task (306) to the second user,
wherein granting access to the data (310) used in the task (306) to the second user comprises determining access rights for the second user for one or more data fields of the data (310) used in the task (306),
wherein an authorisation matrix is created reflecting permissions on each data field granted to the second user under the role required to perform the task,
wherein access control lists for the data fields are combined to form the authorisation matrix,
wherein determining the access rights for the second user for the one or more data fields of the data (310) used in the task (306) comprises:
determining one or more permissions (308) associated with the one or more data fields of the data (310) used in the task (306);
determining one or more roles (304) associated with the one or more permissions (308) associated with the one or more data fields of the data (310) used in the task (306); and
granting access to the one or more data fields of the data (310) used in the task (306) to the second user if a role (304) the second user is a member of is in the one or more roles (304) associated with the one or more permissions (308) associated with the one or more data fields;
a user engine (102) operable to send user data to the authorization control module (116);
a data engine (106) operable to send the one or more data objects to the authorization control module (116); and
a workflow engine (110) operable to send authorization information to the authorization control module (116).

4. The computerized system (100) of claim 3, wherein the data engine (106) is further operable to retrieve the one or more data objects from one or more databases (108); and/or
wherein the user engine (102) is further operable to retrieve user data from one or more databases (104); and/or
wherein the user engine (102) is further operable to maintain one or more user to role assignments (120); and/or
wherein the workflow engine (110) is further operable to maintain one or more data access rules (112) and one or more task to role assignments (114).

5. The computerized system (100) of any one of claims 3 to 4, further comprising a user interface operable to render graphical representations of the user data, the one or more data objects, and one or more business process elements the user data and the one or more data objects are associated with.

6. A computerized method, comprising:
retrieving one or more user data of a business process;
retrieving one or more roles mapped to the one or more user data;
retrieving one or more data objects mapped to the one or more roles; and
analyzing one or more mappings between the one or more user data, the one or more roles, and the one or more data objects to determine if a first user can be granted access to the one or more data objects,
receiving (402) a delegation request from a first user to delegate a task (306) to a second user;
allocating (408) permission (308) to the second user to perform the task (306) if no organizational policies are violated,
wherein allocating (408) permission to the second user to perform the task comprises:
retrieving one or more user to role mappings (120) from a user management engine (120) and one or more task to role assignments (114) for the task from a workflow engine (110);
determining (404) if the first user has permission to delegate the task to the second user; and
determining if the delegation request can be granted based on permissions associated with the one or more user to role mappings (120) and the task to role assignments;
retrieving data (310) used in the task (306) via a data to task association from a data engine (106);
retrieving one or more data to role mappings of the data (310) used in the task (306) and one or more permissions (308) associated with the one or more data to role mappings of the data (310) used in the task (306); and
determining if access to the data (310) used in the task (306) can be granted to the second user based on the one or more data to role mappings of the data (310) used in the task (306) and the one or more permissions (308) associated with the one or more data to role mappings of the data (310) used in the task (306),
wherein determining if access to the data (310) used in the task (306) can be granted to the second user comprises:
determining a role (304) the second user is a member of via one or more user to role mappings (120); and
determining if the role (304) the second user is a member of is in the one or more data to role mappings of the data (310) used in the task (306);
and
granting (414) access to the data (310) used in the task (306) to the second user,
wherein granting access to the data (310) used in the task (306) to the second user comprises determining access rights for the second user for one or more data fields of the data (310) used in the task (306),
wherein an authorisation matrix is created reflecting permissions on each data field granted to the second user under the role required to perform the task,
wherein access control lists for the data fields are combined to form the authorisation matrix,
wherein determining the access rights for the second user for the one or more data fields of the data (310) used in the task (306) comprises:
determining one or more permissions (308) associated with the one or more data fields of the data (310) used in the task (306);
determining one or more roles (304) associated with the one or more permissions (308) associated with the one or more data fields of the data (310) used in the task (306); and
granting access to the one or more data fields of the data (310) used in the task (306) to the second user if a role (304) the second user is a member of is in the one or more roles (304) associated with the one or more permissions (308) associated with the one or more data fields.

7. The computerized method of claim 6, further comprising determining if the first user can delegate one or more tasks to a second user.

8. The computerized method of any one of claims 6 to 7, wherein retrieving the one or more user data comprises:
retrieving one or more user to role mappings associated with the business process; and
retrieving one or more task to role mappings associated with the business process;
retrieving one or more permissions associated with the one or more user to role mappings and the one or more task to role mappings; and
determining one or more users to be able to perform one or more tasks based on the one or more permissions associated with the one or more user to role mappings and the one or more task to role mappings; and/or
wherein retrieving the one or more data objects comprises:
receiving one or more tasks mapped to the one or more roles;
receiving a mapping of the one or more tasks to the one or more data objects;
and
identifying the one or more data objects via the mapping of the one or more tasks to the one or more data objects.

9. The computerized method of any one of claims 6 to 8, further comprising:
receiving a mapping of the first user to the one or more roles;
determining if the first user is a member of a role mapped to one or more tasks associated with the one or more data objects.

10. The computerized method of any one of claims 6 to 9, wherein analyzing the one or more mappings between the one or more user data, the one or more roles, and the one or more data objects to determine if the first user can be granted access to the one or more data objects comprises analyzing one or more permissions associated with the one or more user data, the one or more roles, and the one or more data objects.

11. The computerized method of any one of claims 7 to 10, further comprising determining if the second user is a member of a role mapped to one or more tasks associated with the one or more data objects.

## Patentansprüche

1. Computerlesbares Speichermedium mit computerlesbaren Anweisungen, die konkret darauf gespeichert sind, die, wenn sie von dem Computer ausgeführt werden, bewirken, dass der Computer ein Verfahren zur Flussanalyse sicherheitsempfindlicher Daten durchführt, wobei das Verfahren umfasst:
Empfangen (402) einer Bevollmächtigungsanforderüng von einem ersten Benutzer, um eine Aufgabe (306) an einen zweiten Benutzer zu übertragen;
Zuweisen (408) der Erlaubnis (308) an den zweiten Benutzer, um die Aufgabe (306) durchzuführen, wenn keine Organisationsstrategien verletzt werden,
wobei das Zuweisen (408) der Erlaubnis an den zweiten Benutzer, um die Aufgabe durchzuführen, umfasst:
Abrufen einer oder mehrerer Benutzer-Rollen-Zuordnungen (120) aus einer Benutzerverwaltungsmaschine (120) und einer oder mehrerer Aufgaben-Rollen-Zuordnungen (114) für die Aufgabe einer Workflow Engine bzw. Arbeitsablaufmaschine (110);
Bestimmen (404), ob der erste Benutzer die Genehmigung hat, die Aufgabe an den zweiten Benutzer zu übertragen; und
basierend auf Genehmigungen, die zu der einen oder den mehreren Benutzer-Rollen-Zuordnungen (120) und den Aufgaben-Rollen-Zuordnungen gehören, Bestimmen, ob die Bevollmächtigungsanforderung gewährt werden kann;
Abrufen von Daten (310), die bei der Aufgabe (306) verwendet werden, über eine Daten-Aufgaben-Verbindung aus einer Datenmaschine (106);
Abrufen einer oder mehrerer Daten-Rollen-Zuordnungen der Daten (310), die bei der Aufgabe (306) verwendet werden, und einer oder mehrerer Genehmigungen (308), die zu der einen oder den mehreren Daten-Rollen-Zuordnungen der Daten (310) gehören, die bei der Aufgabe (306) verwendet werden; und
basierend auf den einen oder den mehreren Daten-Rollen-Zuordnungen der Daten (310), die bei der Aufgabe (306) verwendet werden, und der einen oder den mehreren Genehmigungen (308), die zu der einen oder den mehreren Daten-Rollen-Zuordnungen der Daten (310), die bei der Aufgabe (306) verwendet werden, gehören, Bestimmen, ob dem zweiten Benutzer der Zugriff auf die Daten (310), die bei der Aufgabe (306) verwendet werden, gewährt werden kann,
wobei die Bestimmung, ob dem zweiten Benutzer der Zugriff auf die Daten (310), die bei der Aufgabe (306) verwendet werden, gewährt werden kann, umfasst:
Bestimmen einer Rolle (304), für welche der zweite Benutzer über eine oder mehrere Benutzer-Rollen-Zuordnungen (120) ein Mitglied ist; und
Bestimmen, ob die Rolle (304), für welche der zweite Benutzer ein Mitglied ist, in der einen oder den mehreren Daten-Rollen-Zuordnungen der Daten (310) ist, die bei der Aufgabe (306) verwendet werden; und
dem zweiten Benutzer den Zugriff auf die Daten (310), die bei der Aufgabe (306) verwendet werden, gewähren,
wobei das dem-zweiten-Benutzer-Gewähren des Zugriffs auf die Daten (310), die bei der Aufgabe (306) verwendet werden, das Bestimmen der Zugriffsrechte für den zweiten Benutzer für ein oder mehrere Datenfelder der Daten (310), die bei der Aufgabe (306) verwendet werden, umfasst,
wobei eine Berechtigungsmatrix erzeugt wird, die Genehmigungen für jedes Datenfeld wiedergibt, die dem zweiten Benutzer in der Rolle, die für die Durchführung der Aufgabe erforderlich ist, gewährt werden,
wobei Zugangskontrolllisten für die Datenfelder kombiniert werden, um die Berechtigungsmatrix zu bilden,
wobei das Bestimmen der Zugriffsrechte für den zweiten Benutzer für das eine oder die mehreren Datenfelder (310), die bei der Aufgabe (306) verwendet werden, umfasst:
Bestimmen einer oder mehrerer Genehmigungen (308), die zu dem einen oder den mehreren Datenfeldern der Daten (310) gehören, die bei der Aufgabe (306) verwendet werden;
Bestimmen einer oder mehrerer Rollen (304), die zu der einen oder den mehreren Genehmigungen (308) gehören, die zu dem einen oder den mehreren Datenfeldern der Daten (310) gehören, die bei der Aufgabe (306) verwendet werden; und
dem zweiten Benutzer Gewähren des Zugriffs auf das eine oder die mehreren Datenfelder der Daten (310), die bei der Aufgabe (306) verwendet werden, wenn eine Rolle (304), für die der zweite Benutzer ein Mitglied ist, in der einen oder den mehreren Rollen (304) ist, die zu der einen oder den mehreren Genehmigungen (308) gehören, die zu dem einen oder den mehreren Datenfeldern gehören.

2. Computerlesbares Speichermedium nach Anspruch 1, wobei das Verfahren ferner die Benachrichtigung des zweiten Benutzers umfasst, dass die Aufgabe verfügbar ist.

3. Computerbasiertes System (100), das einen Prozessor umfasst, wobei der Prozessor mit einer oder mehreren Speichervorrichtungen kommuniziert, die Anweisungen speichern, wobei die Anweisungen umfassen:
ein Berechtigungskontrollmodul (116), das fähig ist, eine Berechtigungsmatrix für ein oder mehrere Datenfelder eines oder mehrerer Datenobjekte zu erzeugen,
wobei das Berechtigungskontrollmodul (116) ferner betriebsfähig ist, um den Zugriff auf das eine oder die mehreren Datenobjekte basierend auf einer oder mehreren Organisationsstrategien, die von der Arbeitsablaufmaschine (110) empfangen werden, einem oder mehreren Benutzern zu gewähren, wobei das Verfahren umfasst:
Empfangen (402) einer Bevollmächtigungsanforderung von einem ersten Benutzer, um eine Aufgabe (306) an einen zweiten Benutzer zu übertragen;
Zuweisen (408) der Erlaubnis (308) an den zweiten Benutzer, um die Aufgabe (306) durchzuführen, wenn keine Organisationsstrategien verletzt werden,
wobei das Zuweisen (408) der Erlaubnis an den zweiten Benutzer, um die Aufgabe durchzuführen, umfasst:
Abrufen einer oder mehrerer Benutzer-Rollen-Zuordnungen (120) aus einer Benutzerverwaltungsmaschine (120) und einer oder mehrerer Aufgaben-Rollen-Zuordnungen (114) für die Aufgabe einer Workflow Engine bzw. Arbeitsablaufmaschine (110);
Bestimmen (404), ob der erste Benutzer die Genehmigung hat, die Aufgabe an den zweiten Benutzer zu übertragen; und
basierend auf Genehmigungen, die zu der einen oder den mehreren Benutzer-Rollen-Zuordnungen (120) und den Aufgaben-Rollen-Zuordnungen gehören, Bestimmen, ob die Bevollmächtigungsanforderung gewährt werden kann;
Abrufen von Daten (310), die bei der Aufgabe (306) verwendet werden, über eine Daten-Aufgaben-Verbindung aus einer Datenmaschine (106);
Abrufen einer oder mehrerer Daten-Rollen-Zuordnungen der Daten (310), die bei der Aufgabe (306) verwendet werden, und einer oder mehrerer Genehmigungen (308), die zu der einen oder den mehreren Daten-Rollen-Zuordnungen der Daten (310) gehören, die bei der Aufgabe (306) verwendet werden; und
basierend auf den einen oder den mehreren Daten-Rollen-Zuordnungen der Daten (310), die bei der Aufgabe (306) verwendet werden, und der einen oder den mehreren Genehmigungen (308), die zu der einen oder den mehreren Daten-Rollen-Zuordnungen der Daten (310), die bei der Aufgabe (306) verwendet werden, gehören, Bestimmen, ob dem zweiten Benutzer der Zugriff auf die Daten (310), die bei der Aufgabe (306) verwendet werden, gewährt werden kann,
wobei die Bestimmung, ob dem zweiten Benutzer der Zugriff auf die Daten (310), die bei der Aufgabe (306) verwendet werden, gewährt werden kann, umfasst:
Bestimmen einer Rolle (304), für welche der zweite Benutzer über eine oder mehrere Benutzer-Rollen-Zuordnungen (120) ein Mitglied ist; und
Bestimmen, ob die Rolle (304), für welche der zweite Benutzer ein Mitglied ist, in der einen oder den mehreren Daten-Rollen-Zuordnungen der Daten (310) ist, die bei der Aufgabe (306) verwendet werden; und
dem zweiten Benutzer den Zugriff auf die Daten (310), die bei der Aufgabe (306) verwendet werden, gewähren,
wobei das dem-zweiten-Benutzer-Gewähren des Zugriffs auf die Daten (310), die bei der Aufgabe (306) verwendet werden, das Bestimmen der Zugriffsrechte für den zweiten Benutzer für ein oder mehrere Datenfelder der Daten (310), die bei der Aufgabe (306) verwendet werden, umfasst,
wobei eine Berechtigungsmatrix erzeugt wird, die Genehmigungen für jedes Datenfeld wiedergibt, die dem zweiten Benutzer in der Rolle, die für die Durchführung der Aufgabe erforderlich ist, gewährt werden,
wobei Zugangskontrolllisten für die Datenfelder kombiniert werden, um die Berechtigungsmatrix zu bilden,
wobei das Bestimmen der Zugriffsrechte für den zweiten Benutzer für das eine oder die mehreren Datenfelder (310), die bei der Aufgabe (306) verwendet werden, umfasst:
Bestimmen einer oder mehrerer Genehmigungen (308), die zu dem einen oder den mehreren Datenfeldern der Daten (310) gehören, die bei der Aufgabe (306) verwendet werden;
Bestimmen einer oder mehrerer Rollen (304), die zu der einen oder den mehreren Genehmigungen (308) gehören, die zu dem einen oder den mehreren Datenfeldern der Daten (310) gehören, die bei der Aufgabe (306) verwendet werden; und
dem zweiten Benutzer Gewähren des Zugriffs auf das eine oder die mehreren Datenfelder der Daten (310), die bei der Aufgabe (306) verwendet werden, wenn eine Rolle (304), für die der zweite Benutzer ein Mitglied ist, in der einen oder den mehreren Rollen (304) ist, die zu der einen oder den mehreren Genehmigungen (308) gehören, die zu dem einen oder den mehreren Datenfeldern gehören;
eine Benutzermaschine (102), die betriebsfähig ist, um Benutzerdaten an das Berechtigungskontrollmodul (116) zu senden;
eine Datenmaschine (106), die betriebsfähig ist, um das eine oder die mehreren Datenobjekte an das Berechtigungskontrollmodul (116) zu senden; und
eine Arbeitsablaufmaschine (110), die betriebsfähig ist, um Berechtigungsinformationen an das Berechtigungskontrollmodul (116) zu senden.

4. Computerbasiertes System (100) nach Anspruch 3, wobei die Datenmaschine (106) ferner betriebsfähig ist, um das eine oder die mehreren Datenobjekte aus einer oder mehreren Datenbänken (108) abzurufen; und/oder
wobei die Benutzermaschine (102) ferner betriebsfähig ist, Benutzerdaten aus der einen oder den mehreren Datenbanken (104) abzurufen; und/oder
wobei die Benutzermaschine (102) ferner betriebsfähig ist, um eine oder mehrere Benutzer-Rollen-Zuordnungen (120) aufrecht zu erhalten; und/oder
wobei die Arbeitsablaufmaschine (110) ferner betriebsfähig ist, um eine oder mehrere Datenzugriffsregeln (112) und eine oder mehrere Aufgaben-Rollen-Zuordnungen (114) aufrecht zu erhalten.

5. Computerbasiertes System (100) nach einem der Ansprüche 3 bis 4, das ferner eine Benutzerschnittstelle umfasst, die fähig ist, graphische Darstellungen der Benutzerdaten, eines oder mehrerer Datenobjekte und eines oder mehrerer Geschäftsprozesselemente der Benutzerdaten und der einen oder mehreren dazugehörigen Datenobjekte wiederzugeben.

6. Computerbasiertes Verfahren, das umfasst:
Abrufen eines oder mehrerer Benutzerdaten eines Geschäftsprozesses;
Abrufen einer oder mehrerer Rollen, die an das eine oder die mehreren Benutzerdaten zugeordnet sind; und
Abrufen des einen oder der mehreren Datenobjekte, die an die eine oder die mehreren Rollen zugeordnet sind; und
Analysieren einer oder mehrerer Zuordnungen zwischen dem einen oder den mehreren Benutzerdaten, der einen oder den mehreren Rollen und dem einen oder den mehreren Datenobjekten, um zu bestimmen, ob einem ersten Benutzer der Zugriff auf das eine oder die mehreren Datenobjekte gewährt werden kann,
Empfangen (402) einer Bevollmächtigungsanforderung von einem ersten Benutzer, um eine Aufgabe (306) an einen zweiten Benutzer zu übertragen;
Zuweisen (408) der Erlaubnis (308) an den zweiten Benutzer, um die Aufgabe (306) durchzuführen, wenn keine Organisationsstrategien verletzt werden,
wobei das Zuweisen (408) der Erlaubnis an den zweiten Benutzer, um die Aufgabe durchzuführen, umfasst:
Abrufen einer oder mehrerer Benutzer-Rollen-Zuordnungen (120) aus einer Benutzerverwaltungsmaschine (120) und einer oder mehrerer Aufgaben-Rollen-Zuordnungen (114) für die Aufgabe einer Workflow Engine bzw. Arbeitsablaufmaschine (110);
Bestimmen (404), ob der erste Benutzer die Genehmigung hat, die Aufgabe an den zweiten Benutzer zu übertragen; und
basierend auf Genehmigungen, die zu der einen oder den mehreren Benutzer-Rollen-Zuordnungen (120) und den Aufgaben-Rollen-Zuordnungen gehören, Bestimmen, ob die Bevollmächtigungsanforderung gewährt werden kann;
Abrufen von Daten (310), die bei der Aufgabe (306) verwendet werden, über eine Daten-Aufgaben-Verbindung aus einer Datenmaschine (106);
Abrufen einer oder mehrerer Daten-Rollen-Zuordnungen der Daten (310), die bei der Aufgabe (306) verwendet werden, und einer oder mehrerer Genehmigungen (308), die zu der einen oder den mehreren Daten-Rollen-Zuordnungen der Daten (310) gehören, die bei der Aufgabe (306) verwendet werden; und
basierend auf den einen oder den mehreren Daten-Rollen-Zuordnungen der Daten (310), die bei der Aufgabe (306) verwendet werden, und der einen oder den mehreren Genehmigungen (308), die zu der einen oder den mehreren Daten-Rollen-Zuordnungen der Daten (310), die bei der Aufgabe (306) verwendet werden, gehören, Bestimmen, ob dem zweiten Benutzer der Zugriff auf die Daten (310), die bei der Aufgabe (306) verwendet werden, gewährt werden kann,
wobei die Bestimmung, ob dem zweiten Benutzer der Zugriff auf die Daten (310), die bei der Aufgabe (306) verwendet werden, gewährt werden kann, umfasst:
Bestimmen einer Rolle (304), für welche der zweite Benutzer über eine oder mehrere Benutzer-Rollen-Zuordnungen (120) ein Mitglied ist; und
Bestimmen, ob die Rolle (304), für welche der zweite Benutzer ein Mitglied ist, in der einen oder den mehreren Daten-Rollen-Zuordnungen der Daten (310) ist, die bei der Aufgabe (306) verwendet werden; und
dem zweiten Benutzer den Zugriff auf die Daten (310), die bei der Aufgabe (306) verwendet werden, gewähren,
wobei das dem-zweiten-Benutzer-Gewähren des Zugriffs auf die Daten (310), die bei der Aufgabe (306) verwendet werden, das Bestimmen der Zugriffsrechte für den zweiten Benutzer für ein oder mehrere Datenfelder der Daten (310), die bei der Aufgabe (306) verwendet werden, umfasst,
wobei eine Berechtigungsmatrix erzeugt wird, die Genehmigungen für jedes Datenfeld wiedergibt, die dem zweiten Benutzer in der Rolle, die für die Durchführung der Aufgabe erforderlich ist, gewährt werden,
wobei Zugangskontrolllisten für die Datenfelder kombiniert werden, um die Berechtigungsmatrix zu bilden,
wobei das Bestimmen der Zugriffsrechte für den zweiten Benutzer für das eine oder die mehreren Datenfelder (310), die bei der Aufgabe (306) verwendet werden, umfasst:
Bestimmen einer oder mehrerer Genehmigungen (308), die zu dem einen oder den mehreren Datenfeldern der Daten (310) gehören, die bei der Aufgabe (306) verwendet werden;
Bestimmen einer oder mehrerer Rollen (304), die zu der einen oder den mehreren Genehmigungen (308) gehören, die zu dem einen oder den mehreren Datenfeldern der Daten (310) gehören, die bei der Aufgabe (306) verwendet werden; und
dem zweiten Benutzer Gewähren des Zugriffs auf das eine oder die mehreren Datenfelder der Daten (310), die bei der Aufgabe (306) verwendet werden, wenn eine Rolle (304), für die der zweite Benutzer ein Mitglied ist, in der einen oder den mehreren Rollen (304) ist, die zu der einen oder den mehreren Genehmigungen (308) gehören, die zu dem einen oder den mehreren Datenfeldern gehören.

7. Computerbasiertes Verfahren nach Anspruch 6, das ferner das Bestimmen umfasst, ob der erste Benutzer eine oder mehrere Aufgaben an einen zweiten Benutzer übertragen kann.

8. Computerbasiertes Verfahren nach einem der Ansprüche 6 bis 7, wobei das Abrufen des einen oder der mehreren Benutzerdaten umfasst:
Abrufen einer oder mehrerer Benutzer-Rollen-Zuordnungen, die zu dem Geschäftsprozess gehören; und
Abrufen einer oder mehrerer Aufgaben-Rollen-Zuordnungen, die zu dem Geschäftsprozess gehören;
Abrufen einer oder mehrerer Genehmigungen, die zu der einen oder den mehreren Benutzer-Rollen-Zuordnungen und der einen oder den mehreren Aufgaben-Rollen-Zuordnungen gehören; und
Bestimmen eines oder mehrerer Benutzer, um fähig zu sein, eine oder mehrere Aufgaben basierend auf der einen oder den mehreren Genehmigungen, die zu der einen oder den mehreren Benutzer-Rollen-Zuordnungen und der einen oder mehreren Aufgaben-Rollen-Zuordnungen gehören, durchzuführen; und/oder wobei das Abrufen des einen oder der mehreren Datenobjekte umfasst:
Empfangen einer oder mehrerer Aufgaben, die an die eine oder die mehreren Rollen zugeordnet sind;
Empfangen einer Zuordnung der einen oder der mehreren Aufgaben an das eine oder die mehreren Datenobjekte; und
Identifizieren des einen oder der mehreren Datenobjekte über die Zuordnung der einen oder der mehreren Aufgaben an das eine öder die mehreren Datenobjekte.

9. Computerbasiertes Verfahren nach einem der Ansprüche 6 bis 8, das ferner umfasst:
Empfangen einer Zuordnung des ersten Benutzers an die eine oder die mehreren Rollen;
Bestimmen, ob der erste Benutzer ein Mitglied einer Rolle ist, die einer oder mehreren Aufgaben zugeordnet ist, die zu dem einen oder den mehreren Datenobjekten gehören.

10. Computerbasiertes Verfahren nach einem der Ansprüche 6 bis 9, wobei das Analysieren der einen oder der mehreren Zuordnungen zwischen dem einen oder den mehreren Benutzerdaten, der einen oder den mehreren Rollen und dem einen oder den mehreren Datenobjekten, um zu bestimmen, ob dem ersten Benutzer der Zugriff auf das eine oder die mehreren Datenobjekte gewährt werden kann, das Analysieren der einen oder der mehreren Genehmigungen, die zu dem einen oder den mehreren Benutzerdaten, der einen oder den mehreren Rollen und dem einen oder den mehreren Datenobjekten gehören, umfasst.

11. Computerbasiertes Verfahren nach einem der Ansprüche 7 bis 10, das ferner die Bestimmung umfasst, ob der zweite Benutzer ein Mitglied einer Rolle ist, die an eine oder mehrere Aufgaben zugeordnet ist, die zu dem einen oder den mehreren Datenobjekten gehört/en.

## Revendications

1. Support de stockage lisible par ordinateur ayant des instructions lisibles par ordinateur stockées de manière tangible sur lui qui, lorsqu'elles sont exécutées par l'ordinateur, amènent l'ordinateur à réaliser un procédé d'analyse de flux de données à conscience de sécurité, le procédé comprenant :
recevoir (402) une demande de délégation d'un premier utilisateur pour déléguer une tâche (306) à un second utilisateur ;
attribuer (408) une permission (308) au second utilisateur de réaliser la tâche (306) si aucune politique organisationnelle n'est violée,
dans lequel attribuer (408) une permission au second utilisateur de réaliser la tâche comprend :
récupérer une ou plusieurs mises en correspondance d'utilisateur avec un rôle (120) d'un moteur de gestion d'utilisateurs (120) et une ou plusieurs affectations de tâche à un rôle (114) pour la tâche d'un moteur de flux de travail (110) ;
déterminer (404) si le premier utilisateur a la permission de déléguer la tâche au second utilisateur ; et
déterminer si la demande de délégation peut être accordée en fonction de permissions associées à la ou aux mises en correspondance d'utilisateur avec un rôle (120) et aux affectations de tâche à un rôle ;
récupérer des données (310) utilisées dans la tâche (306) par le biais d'une association de données à une tâche d'un moteur de données (106) ;
récupérer une ou plusieurs mises en correspondance de données avec un rôle des données (310) utilisées dans la tâche (306) et une ou plusieurs permissions (308) associées à la ou aux mises en correspondance de données avec un rôle des données (310) utilisées dans la tâche (306) ; et
déterminer si l'accès aux données (310) utilisées dans la tâche (306) peut être accordé au second utilisateur en fonction de la ou des mises en correspondance de données avec un rôle des données (310) utilisées dans la tâche (306) et de la ou des permissions (308) associées à la ou aux mises en correspondance de données avec un rôle des données (310) utilisées dans la tâche (306),
dans lequel déterminer si l'accès aux données (310) utilisées dans la tâche (306) peut être accordé au second utilisateur comprend :
déterminer un rôle (304) dont le second utilisateur est un membre par le biais d'une ou plusieurs mises en correspondance d'utilisateur avec un rôle (120) ; et
déterminer si le rôle (304) dont le second utilisateur est un membre est dans la ou les mises en correspondance de données avec un rôle des données (310) utilisées dans la tâche (306) ; et
accorder (414) l'accès aux données (310) utilisées dans la tâche (306) au second utilisateur,
dans lequel accorder l'accès aux données (310) utilisées dans la tâche (306) au second utilisateur comprend déterminer des droits d'accès pour le second utilisateur pour un ou plusieurs champs de données des données (310) utilisées dans la tâche (306),
dans lequel une matrice d'autorisation est créée reflétant des permissions sur chaque champ de données accordées au second utilisateur dans le cadre du rôle requis pour réaliser la tâche,
dans lequel des listes de commande d'accès pour les champs de données sont combinées pour former la matrice d'autorisation,
dans lequel déterminer les droits d'accès pour le second utilisateur pour le ou les champs de données des données (310) utilisées dans la tâche (306) comprend :
déterminer une ou plusieurs permissions (308) associées au ou aux champs de données des données (310) utilisées dans la tâche (306) ;
déterminer un ou plusieurs rôles (304) associés à la ou aux permissions (308) associées au ou aux champs de données des données (310) utilisées dans la tâche (306) ; et
accorder l'accès au ou aux champs de données des données (310) utilisées dans la tâche (306) au second utilisateur si un rôle (304) dont le second utilisateur est un membre est dans le ou les rôles (304) associés à la ou aux permissions (308) associées au ou aux champs de données.

2. Support de stockage lisible par ordinateur selon la revendication 1, dans lequel le procédé comprend en outre notifier le second utilisateur que la tâche est disponible.

3. Système informatisé (100) incluant un processeur, le processeur communiquant avec un ou plusieurs dispositifs de mémoire stockant des instructions, les instructions comprenant :
un module de commande d'autorisation (116) pouvant opérer pour créer une matrice d'autorisation pour un ou plusieurs champs de données d'un ou
plusieurs objets-données,
dans lequel le module de commande d'autorisation (116) peut en outre opérer pour accorder un accès au ou aux objets-données à un ou plusieurs utilisateurs en fonction d'une ou plusieurs politiques organisationnelles reçues du moteur de flux de travail (110), le procédé comprenant :
recevoir (402) une demande de délégation d'un premier utilisateur pour déléguer une tâche (306) à un second utilisateur ;
attribuer (408) une permission (308) au second utilisateur de réaliser la tâche (306) si aucune politique organisationnelle n'est violée,
dans lequel attribuer (408) une permission au second utilisateur de réaliser la tâche comprend :
récupérer une ou plusieurs mises en correspondance d'utilisateur avec un rôle (120) d'un moteur de gestion d'utilisateurs (120) et une ou plusieurs affectations de tâche à un rôle (114) pour la tâche d'un moteur de flux de travail (110) ;
déterminer (404) si le premier utilisateur a la permission de déléguer la tâche au second utilisateur ; et
déterminer si la demande de délégation peut être accordée en fonction de permissions associées à la ou aux mises en correspondance d'utilisateur avec un rôle (120) et aux affectations de tâche à un rôle ;
récupérer des données (310) utilisées dans la tâche (306) par le biais d'une association de données à une tâche d'un moteur de données (106) ;
récupérer une ou plusieurs mises en correspondance de données avec un rôle des données (310) utilisées dans la tâche (306) et une ou plusieurs permissions (308) associées à la ou aux mises en correspondance de données avec un rôle des données (310) utilisées dans la tâche (306) ; et
déterminer si l'accès aux données (310) utilisées dans la tâche (306) peut être accordé au second utilisateur en fonction de la ou des mises en correspondance de données avec un rôle des données (310) utilisées dans la tâche (306) et de la ou des permissions (308) associées à la ou aux mises en correspondance de données avec un rôle des données (310) utilisées dans la tâche (306),
dans lequel déterminer si l'accès aux données (310) utilisées dans la tâche (306) peut être accordé au second utilisateur comprend :
déterminer un rôle (304) dont le second utilisateur est un membre par le biais d'une ou plusieurs mises en correspondance d'utilisateur avec un rôle (120) ; et
déterminer si le rôle (304) dont le second utilisateur est un membre est dans la ou les mises en correspondance de données avec un rôle des données (310) utilisées dans la tâche (306) ; et
accorder (414) l'accès aux données (310) utilisées dans la tâche (306) au second utilisateur,
dans lequel accorder l'accès aux données (310) utilisées dans la tâche (306) au second utilisateur comprend déterminer des droits d'accès pour le second utilisateur pour un ou plusieurs champs de données des données (310) utilisées dans la tâche (306),
dans lequel une matrice d'autorisation est créée reflétant des permissions sur chaque champ de données accordées au second utilisateur dans le cadre du rôle requis pour réaliser la tâche,
dans lequel des listes de commande d'accès pour les champs de données sont combinées pour former la matrice d'autorisation,
dans lequel déterminer les droits d'accès pour le second utilisateur pour le ou les champs de données des données (310) utilisées dans la tâche (306) comprend :
déterminer une ou plusieurs permissions (308) associées au ou aux champs de données des données (310) utilisées dans la tâche (306) ;
déterminer un ou plusieurs rôles (304) associés à la ou aux permissions (308) associées au ou aux champs de données des données (310) utilisées dans la tâche (306) ; et
accorder l'accès au ou aux champs de données des données (310) utilisées dans la tâche (306) au second utilisateur si un rôle (304) dont le second utilisateur est un membre est dans le ou les rôles (304) associés à la ou aux permissions (308) associées au ou aux champs de données ;
un moteur d'utilisateur (102) pouvant opérer pour envoyer des données d'utilisateur au module de commande d'autorisation (116) ;
un moteur de données (106) pouvant opérer pour envoyer le ou les objets-données au module de commande d'autorisation (116) ; et
un moteur de flux de travail (110) pouvant opérer pour envoyer des informations d'autorisation au module de commande d'autorisation (116).

4. Système informatisé (100) selon la revendication 3, dans lequel le moteur de données (106) peut en outre opérer pour récupérer le ou les objets-données d'une ou plusieurs bases de données (108) ; et/ou
dans lequel le moteur d'utilisateur (102) peut en outre opérer pour récupérer des données d'utilisateur d'une ou plusieurs bases de données (104) ; et/ou dans lequel le moteur d'utilisateur (102) peut en outre opérer pour maintenir une ou plusieurs affectations d'utilisateur à un rôle (120) ; et/ou dans lequel le moteur de flux de travail (110) peut en outre opérer pour maintenir une ou plusieurs règles d'accès aux données (112) et une ou plusieurs affectations de tâche à un rôle (114).

5. Système informatisé (100) selon l'une quelconque des revendications 3 à 4, comprenant en outre une interface utilisateur pouvant opérer pour rendre des représentations graphiques des données d'utilisateur, du ou des objets-données et d'un ou plusieurs éléments de processus commercial auquel/auxquels les données d'utilisateur et le ou les objets-données sont associés.

6. Procédé informatisé comprenant :
récupérer une ou plusieurs données d'utilisateur d'un processus commercial ;
récupérer un ou plusieurs rôles mis en correspondance avec la ou les données d'utilisateur ;
récupérer un ou plusieurs objets-données mis en correspondance avec le ou les rôles ; et
analyser une ou plusieurs mises en correspondance entre la ou les données d'utilisateur, le ou les rôles et le ou les objets-données pour déterminer si un premier utilisateur peut se voir accorder un accès au ou aux objets-données,
recevoir (402) une demande de délégation d'un premier utilisateur pour déléguer une tâche (306) à un second utilisateur ;
attribuer (408) une permission (308) au second utilisateur de réaliser la tâche (306) si aucune politique organisationnelle n'est violée,
dans lequel attribuer (408) une permission au second utilisateur de réaliser la tâche comprend :
récupérer une ou plusieurs mises en correspondance d'utilisateur avec un rôle (120) d'un moteur de gestion d'utilisateurs (120) et une ou plusieurs affectations de tâche à un rôle (114) pour la tâche d'un moteur de flux de travail (110) ;
déterminer (404) si le premier utilisateur a la permission de déléguer la tâche au second utilisateur ; et
déterminer si la demande de délégation peut être accordée en fonction de permissions associées à la ou aux mises en correspondance d'utilisateur avec un rôle (120) et aux affectations de tâche à un rôle ;
récupérer des données (310) utilisées dans la tâche (306) par le biais d'une association de données à une tâche d'un moteur de données (106) ;
récupérer une ou plusieurs mises en correspondance de données avec un rôle des données (310) utilisées dans la tâche (306) et une ou plusieurs permissions (308) associées à la ou aux mises en correspondance de données avec un rôle des données (310) utilisées dans la tâche (306) ; et
déterminer si l'accès aux données (310) utilisées dans la tâche (306) peut être accordé au second utilisateur en fonction de la ou des mises en correspondance de données avec un rôle des données (310) utilisées dans la tâche (306) et de la ou des permissions (308) associées à la ou aux mises en correspondance de données avec un rôle des données (310) utilisées dans la tâche (306),
dans lequel déterminer si l'accès aux données (310) utilisées dans la tâche (306) peut être accordé au second utilisateur comprend :
déterminer un rôle (304) dont le second utilisateur est un membre par le biais d'une ou plusieurs mises en correspondance d'utilisateur avec un rôle (120) ; et
déterminer si le rôle (304) dont le second utilisateur est un membre est dans la ou les mises en correspondance de données avec un rôle des données (310) utilisées dans la tâche (306) ; et
accorder (414) l'accès aux données (310) utilisées dans la tâche (306) au second utilisateur,
dans lequel accorder l'accès aux données (310) utilisées dans la tâche (306) au second utilisateur comprend déterminer des droits d'accès pour le second utilisateur pour un ou plusieurs champs de données des données (310) utilisées dans la tâche (306),
dans lequel une matrice d'autorisation est créée reflétant des permissions sur chaque champ de données accordées au second utilisateur dans le cadre du rôle requis pour réaliser la tâche,
dans lequel des listes de commande d'accès pour les champs de données sont combinées pour former la matrice d'autorisation,
dans lequel déterminer les droits d'accès pour le second utilisateur pour le ou les champs de données des données (310) utilisées dans la tâche (306) comprend :
déterminer une ou plusieurs permissions (308) associées au ou aux champs de données des données (310) utilisées dans la tâche (306) ;
déterminer un ou plusieurs rôles (304) associés à la ou aux permissions (308) associées au ou aux champs de données des données (310) utilisées dans la tâche (306) ; et
accorder l'accès au ou aux champs de données des données (310) utilisées dans la tâche (306) au second utilisateur si un rôle (304) dont le second utilisateur est un membre est dans le ou les rôles (304) associés à la ou aux permissions (308) associées au ou aux champs de données.

7. Procédé informatisé selon la revendication 6, comprenant en outre déterminer si le premier utilisateur peut déléguer une ou plusieurs tâches à un second utilisateur.

8. Procédé informatisé selon l'une quelconque des revendications 6 à 7, dans lequel récupérer la ou les données d'utilisateur comprend :
récupérer une ou plusieurs mises en correspondance d'utilisateur avec un rôle associées au processus commercial ; et
récupérer une ou plusieurs mises en correspondance de tâche avec un rôle associées au processus commercial ;
récupérer une ou plusieurs permissions associées à la ou aux mises en correspondance d'utilisateur avec un rôle et à la ou aux mises en correspondance de tâche avec un rôle ; et
déterminer un ou plusieurs utilisateurs devant être capables de réaliser une ou
plusieurs tâches en fonction de la ou des permissions associées à la ou aux mises en correspondance d'utilisateur avec un rôle et à la ou aux mises en correspondance de tâche avec un rôle ; et/ou
dans lequel récupérer le ou les objets-données comprend :
recevoir une ou plusieurs tâches mises en correspondance avec le ou les rôles ;
recevoir une mise en correspondance de la ou des tâches avec le ou les objets-données ; et
identifier le ou les objets-données par le biais de la mise en correspondance de la ou des tâches avec le ou les objets-données.

9. Procédé informatisé selon l'une quelconque des revendications 6 à 8, comprenant en outre :
recevoir une mise en correspondance du premier utilisateur avec le ou les rôles ;
déterminer si le premier utilisateur est un membre d'un rôle mis en correspondance avec une ou plusieurs tâches associées au ou aux objets-données.

10. Procédé informatisé selon l'une quelconque des revendications 6 à 9, dans lequel analyser la ou les mises en correspondance entre la ou les données d'utilisateur, le ou les rôles et le ou les objets-données pour déterminer si le premier utilisateur peut se voir accorder un accès au ou aux objets-données comprend analyser une ou plusieurs permissions associées à la ou aux données d'utilisateur, au ou aux rôles et au ou aux objets-données.

11. Procédé informatisé selon l'une quelconque des revendications 7 à 10, comprenant en outre déterminer si le second utilisateur est un membre d'un rôle mis en correspondance avec une ou plusieurs tâches associées au ou aux objets-données.
